# EUROPEAN PATENT APPLICATION

(11) **EP 4 300 344 A1**
(43) Date of publication of application: **03.01.2024**
(21) Application number: 22305935.3
(22) Date of filing: 27.06.2022
(51) Int. Cl.: G06F 30/10, G06T 17/00

(54) **CAD FEATURE TREE OPTIMIZATION**

(71) Applicant: Dassault Systèmes, 78140 Vélizy-Villacoublay (FR)
(72) Inventor: BRIFAULT, Lucas, Vélizy-Villacoublay (FR); JOURDAN, Ariane, Vélizy-Villacoublay (FR); MEHR, Eloi, Vélizy-Villacoublay (FR)
(74) Representative: Bandpay & Greuter

(57) **Abstract**

The disclosure notably relates to a computer-implemented method for generating a CAD feature tree from a discrete geometrical representation of a mechanical product. The method comprises providing the discrete geometrical representation, and a set of CAD features. The method further comprises determining one or more sequences of CAD features from the set of CAD features by optimizing an objective function which rewards a fitting of the discrete geometrical representation by a candidate sequence, and penalizes a complexity of a candidate sequence, the complexity of a candidate sequence being a function of the candidate sequence that increases when adding a feature to the candidate sequence.

## Description

### TECHNICAL FIELD

The disclosure relates to the field of computer programs and systems, and more specifically to a method, system and program for generating a CAD feature tree from a discrete geometrical representation of a mechanical product.

### BACKGROUND

A number of solutions, hardware and software, are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for analyzing and simulating the physical behavior of a future product. CAM is an acronym for Computer-Aided Manufacturing, e.g. it relates to software solutions for defining product manufacturing processes and resources. In such computer-aided design solutions, the graphical user interface plays an important role as regards the efficiency of the technique. These techniques may be embedded within Product Lifecycle Management (PLM) solutions. PLM refers to an engineering strategy that helps companies to share product data, apply common processes, and leverage corporate knowledge for the development of products from conception to the end of their life, across the concept of extended enterprise. The PLM solutions provided by Dassault Systèmes (under the trademarks CATIA, SIMULIA, DELMIA and ENOVIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the solutions deliver common models linking products, processes, resources to enable dynamic, knowledge-based product creation and decision support that drives optimized product definition, manufacturing preparation, production and service.

Some of these systems and programs provide functionalities for processing CAD models of mechanical products.

Specifically, some of the provided functionalities are directed to automatic CSG tree reconstruction meshes or point clouds.

Du et al. "InverseCSG: Automatic conversion of 3D models to CSG trees", ACM SIGGRAPH ASIA 2018, 2018, discloses a method for reverse-engineering the process by which 3D models may have been generated, in the language of constructive solid geometry (CSG). Observing that CSG is a formal grammar, the document formulates this inverse CSG problem as a program synthesis problem by a solution which is an algorithm that couples geometric processing with program synthesis techniques. In this scheme, geometric processing is used to convert the mixed discrete and continuous domain of CSG trees to a pure discrete domain where modern program synthesizers excel.

Wu et al., "Constructing 3D CSG Models from 3D Raw Point Clouds", Computer Graphics Forum, 2018, 37, pp. 221-232, discloses a method to construct CSG models and trees directly over raw point clouds. Specifically, a large number of hypothetical bounded primitive candidates are first extracted from raw scans, followed by a designed pruning strategy. The method then approximates the target CSG model by the combination of a subset of these candidates with corresponding Boolean operations using a binary optimization technique, from which the corresponding CSG tree can be derived. The method attempts to consider the minimal description length concept in the point cloud analysis setting, where the objective function is designed to minimize the construction error and complexity simultaneously.

The above-mentioned methods are very generic and not specifically designed for generating a CAD feature tree from a representation of a mechanical product. Therefore, these methods are not well adapted to generate CAD features and lack insights into how feature trees are generated. These issues limit their computation efficiency and prevent their application on standard 3D models.

Within this context, there is still a need for an improved solution for processing CAD models of mechanical products.

### SUMMARY

It is therefore provided a computer-implemented method for generating a CAD feature tree from a discrete geometrical representation of a mechanical product. The method comprises providing the discrete geometrical representation, and a set of CAD features. The method further comprises determining one or more sequences of CAD features from the set of CAD features by optimizing an objective function which rewards a fitting of the discrete geometrical representation by a candidate sequence, and penalizes a complexity of a candidate sequence, the complexity of a candidate sequence being a function of the candidate sequence that increases when adding a feature to the candidate sequence.

The method may comprise one or more of the following:
- the objective function comprises a subtraction of the complexity of a candidate sequence by a term rewarding a fitting of the discrete geometrical representation by the candidate sequence;
- the term rewarding a fitting is weighted by a weighting parameter;
- the objective function is of the type: 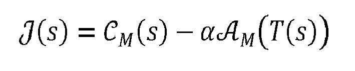 where s is the candidate sequence, J(s) is the objective function, ${C}_{M} \left(s\right)$ is the complexity of the candidate sequence and ${αA}_{M} \left(T\left(s\right)\right)$ is the term, *α* being a weighting parameter, and *T(s)* is a CAD feature tree resulting from the candidate sequence s;
- the optimization of the objective function is under a constraint that each of the determined one or more sequences having a fitting of the discrete geometrical representation that is larger than a fitting threshold;
- the rewarding of a fitting is based on a ratio between a surface area of a covering of the discrete geometrical representation by the candidate sequence (*f*), and a surface area of the discrete geometrical representation;
- the complexity is of the type ${C}_{M} \left({f}_{1}, ⋯, {f}_{n}\right) = \frac{1}{M} \left(\left({\sum }_{i = 1}^{n} \left|\partial {f}_{i}⋂M\right|\right)-\left|\partial T{\left({f}_{1}, ⋯, {f}_{n}\right)}_{+}⋂M\right|\right)$ where ${C}_{M}$ is the complexity of a sequence s of CAD features (*f*₁, ··· , *fₙ*), *∂T*(*f*₁, ··· , *fₙ*) is a boundary of a feature resulting from the sequence s, n is the number of CAD features in the sequence s, ∂*fᵢ* is a boundary of the CAD feature *fᵢ*, ∂*fᵢ* ∩ *M* is an intersection between the boundary ∂*fᵢ* and the discrete geometrical representation *M,* and the function |*N*| outputs a the surface area of the argument *N*;
- the optimization is performed on a subset of candidate sequences each consisting of:
   ∘ non-repeated CAD features of the set, and/or
   ∘ CAD features of the set ordered with respect to a feature order, the feature order rewards a covering of the discrete geometrical representation by the candidate sequence;
- the determining of the one or more sequences of CAD features comprises iteratively building the one or more sequences, by iterations of:
   ∘ building a subset of sequence of CAD features, each sequence of the subset being a respective completion of a respective intermediate sequence built at the previous iteration, and
   ∘ building a one or more next intermediate sequences by selecting them in the subset based on an optimization score of the respective intermediate sequence;
- the optimization score of an intermediate sequence is a subtraction of a fitting upper bound of the intermediate sequence by the complexity of the intermediate sequence;
- each sequence of the built subset has a fitting upper bound larger than a fitting upper bound threshold; and/or
- the built respective completions belong to a subset of candidate completions each consisting of:
   ∘ non-repeated CAD features of the set, and/or
   ∘ CAD features of the set ordered with respect to a feature order, the feature order rewards a covering of the discrete geometrical representation by the candidate sequence.

It is further provided a computer program comprising instructions for performing the method.

It is further provided a computer readable storage medium having recorded thereon the computer program.

It is further provided a system comprising a processor coupled to a memory, the memory having recorded thereon the computer program.

### BRIEF DESCRIPTION OF THE DRAWINGS

Non-limiting examples will now be described in reference to the accompanying drawings, where:
- FIG. 1 shows an example of a graphical user interface of the system; and
- FIG. 2 shows an example of the system.

### DETAILED DESCRIPTION

It is proposed a computer-implemented method for generating a CAD feature tree from a discrete geometrical representation of a mechanical product. The method comprises providing the discrete geometrical representation and a set of CAD features. The method further comprises determining one or more sequences of CAD features from the set of CAD features by optimizing an objective function. The objective function rewards a fitting of the discrete geometrical representation by a candidate sequence and penalizes a complexity of a candidate sequence. The complexity of a candidate sequence is a function of the candidate sequence that increases when adding a feature to the candidate sequence.

Such a method constitutes an improved solution for processing CAD models of a mechanical product. The generation of a CAD feature tree from a discrete geometrical representation of a mechanical product allows to prepare the mechanical product (by preparing its CAD feature(s)) in view of the manufacturing and is particularly relevant in the field of manufacturing CAD as discussed hereinbelow. In the manufacturing CAD, generating a CAD feature tree allows an easy manipulation and/or editability and/or efficient storage in memory. Furthermore, a CAD model that includes a CAD feature tree forms a basis for the downstream manufacturing of the product represented by the CAD model, as further discussed hereinafter.

The method obtains one or more CAD models each comprising or consisting in one of the one or more determined sequences of CAD features, or one or more determined CAD feature tree obtained therefrom (i.e., each CAD feature tree corresponding a determined sequence of CAD features), by optimizing an objective function. The objective function rewards a fitting of the provided discrete geometrical representation by a candidate sequence (of CAD features) while penalizing a complexity of said candidate sequence. Thereby, the method enables controlling the quality of the generated CAD feature to fit a provided geometry, and the complexity of the generated CAD feature simultaneously using an optimizing procedure of an objective function. The objective function combines both the fitting quality and complexity factors. This constitutes an improved solution for generating CAD feature trees in particular for non-simplistic (e.g., standard or complex) mechanical products with adequate accuracy and fidelity to the provided geometrical representation of said products while keeping the method computationally efficient by controlling the complexity of the generated CAD feature tree. Such a complexity is an increasing function of a size of the candidate sequence in the sense that when a feature is added to the candidate sequence, the value of the complexity function increases. Thereby, the method is able to efficiently control the size (i.e., the number of included features) in the sequence.

As discussed above, the method may obtain more than one sequence of CAD features. The method then may output all the determined sequences, for example, by presenting them to a user. The user then may choose one of the determined sequences based on a technical criterion, for example, the user may choose the most accurate sequence (i.e., the one with the best fitting) or the least complex one. Alternatively, the method may output one of the determined sequences to the user according to such criteria (e.g., the most accurate or the least complex sequence). The method may comprise providing such criteria as inputs to the method. Such a computer-implemented method may form or be a part of an automated computer-implemented method for the purpose of generation of a CAD feature tree and without any human (e.g., a user or more specifically a technician).

As discussed above, the method comprises providing the discrete geometrical representation (of the mechanical product), and a set of CAD features. By "providing" an input (e.g., the discrete geometrical representation, or the set of CAD features), it is meant obtaining said input by the method. Such an obtaining may mean or comprise downloading said input (e.g., from an online database, or an online cloud), or retrieving said input from a memory (e.g., a persistent memory). Alternatively, such an obtaining may comprise creating the set of CAD features, for example by detecting at least one or more CAD features from the provided representation.

The provided discrete geometrical representation may stem from physical measurements on a real object (e.g., the mechanical part), for example within a reconstruction process as discussed hereinbelow, e.g. upon providing a scanning of the real object (e.g., a 3D scanning). In such cases, the providing of the discrete geometrical representation may comprise the reconstruction process which obtains the discrete geometrical representation of the mechanical product from physical measurements. The method may then determine one or more sequences of CAD features from the provided set of CAD features by optimizing an objective function based on the obtained discrete geometrical representation.

Exploiting such discrete geometrical representations obtained by a reconstruction process has some practical challenges. In particular, such representations may comprise a significant amount of noise (e.g., due to limited precision of sensors used to perform the physical measurements on the real object), be incomplete (e.g., due to inaccessibility of some parts of the real object to perform the physical measurement), and/or be not accompanied by a respective CAD feature tree. Each of said challenges may impede using the provided discrete geometrical representation in reverse engineering applications, as it reduces the accuracy of a final manufactured object and/or restricts the ability of a user to apply modifications before finalizing the mechanical product to be manufactured.

The provided discrete geometrical representation may alternatively originate from a CAD or CAE model designed by another CAD system and for which the CAD feature tree is unknown. In such cases, the providing of the discrete geometrical representation may comprise inputting (e.g., by reading from a local memory or a remote database) the discrete geometrical representation (e.g., upon a transform from an existing CAD/CAE model) and determining the respective one or more CAD feature sequences.

As discussed above, the method comprises providing the set of CAD features. As known *per se* a "CAD feature" or equivalently a geometric CAD feature is a parametric shape description of a space region with particular geometric or topological properties. As known *per se* from CAD, a CAD feature includes shape/geometry information and parametric information for representing a portion of the manufacturing product modeled/captured by the CAD feature. The CAD feature may as known comprise a definition/specification of a geometry/shape corresponding to the portion modeled by the CAD feature (e.g. a definition/specification geometric primitive) and one or more CAD parameters that specify the geometry and its topology.

The concept of CAD feature tree is well-known in CAD. The (CAD) feature tree is a tree organization of CAD operations (e.g. including Boolean and non-Boolean operations) on CAD features that each model a portion of the manufacturing product. More specifically, the feature tree is a directed acyclic graph (as discussed in https://en.wikipedia.org/wiki/Directed acyclic graph) that describes/captures the order of sequence and combination of the CAD operations. The feature tree thus includes one or more CAD parameters each being respective to a respective CAD feature of the feature tree. Non-limitative examples of such CAD parameters include: coordinates of a point in a sketch, height of extrusion of a profile, thickness of a shell, radius of a fillet, and smoothness of a loft surface.

Thereby, the provided set of CAD features may comprise or consists in providing a set of parameters such that each element of the set (i.e., a group of parameters) comprises the one or more CAD parameters of a CAD feature of the provided set of CAD features. In examples, the provided set of CAD features may comprise or consist in detected CAD features from the provided discrete geometrical representation. In such cases, the providing of the set of CAD features may further comprise performing a feature detection method on a set of discrete geometrical representations (among which, the provided discrete geometrical representation) to obtain one or more detected features, and to insert the one or more detected features in the provided dataset. Alternatively, or additionally, the providing of the set of CAD features may comprise providing a set of CAD features extracted from a general CAD features library which (e.g., significantly) includes all the usual CAD features. Yet, alternatively, or additionally, the providing of the set of CAD features may comprise providing a tailor-made set from a relevant real-world use of the mechanical product in which the mechanical product is supposed to be used (e.g., features presenting standard holes according to a known standard in said technical field).

Each CAD feature of the provided set of CAD features comprises an interior and a boundary. The boundary of a feature represents a surface covered by the feature and the interior of a feature represents a surface erased by the feature. Each CAD feature of the provided set corresponds to a respective volume. In examples where the discrete geometrical representation is a 2D representation, by a surface it is meant one or more straight and/or curved line segments (e.g., a poly line), and the respective volume means an area of Hausdorff measure of dimension 2 in 2D space. In this regard, each surface of the discrete geometrical representation (e.g., one or more mesh's faces when the discrete geometrical representation is a mesh or when the mesh is obtained from a conversion of a respective point cloud as discussed hereinbelow) may be described using a combination of one or more CAD features via their respective interior and boundary and/or the respective volume. The boundary of a feature with respect to a mesh may correspond to the mesh's faces covered by the feature and the interior may correspond to the mesh's faces erased by the feature. Such a representation is built using computational geometry and improves the generation of CAD feature tree by enabling the computation of a new partition of the input discrete geometrical representation to speed-up the computational time. In implementations let *M* be the representation embedded in ${ℝ}^{d}$, where *d* = 2 or 3. A feature *f* then is an object defined by two open disjoints domains *f*₋ and *f*₊ of ${ℝ}^{d}$, where Ω(*f*) = *f*₋ ∪ *f*₊, and Ω(*f*) is the respective volume of the feature, i.e., (total) volume/domain occupied by the feature in the ${ℝ}^{d}$ space. The interior of *f* with respect to *M* is defined by ${f}_{\left(\pm \right)}^{M} = {f}_{\left(\pm \right)} ∩ M$. Furthermore, $\partial {f}_{+}^{M}$ (resp. $\partial {f}_{-}^{M}$) is the positive boundary (resp. negative boundary) of *f* with respect to *M*.

As discussed above, the method comprises determining one or more sequences from the CAD features of the provided set. By "determining of one or more sequences of CAD features from the set of CAD features" it is meant selecting one or more sequences of CAD features such that each sequence comprises one or more CAD features in order (in order to form a sequence) from the provided set. In other words, the provided set is a pool of candidate CAD features to form each of the one or more determined sequences. The method determines said one or more sequences from the set of CAD features by "optimizing an objective function", i.e., upon solving an optimization problem on the provided set of CAD features. In other words, the method explores the provided set of CAD features to select each feature of each determined sequence such that the objective function has an optimal value (e.g., a minimum value).

By "an objective function which rewards a fitting of the discrete geometrical representation by a candidate sequence" it is meant that said objective function is configured so as to increase, when the function is optimized, the fitting of the discrete geometrical representation by a candidate sequence selected by the optimization. By the "fitting of the discrete geometrical representation by a candidate sequence" it is meant how accurate the discrete geometrical representation is represented (i.e., reconstructed) from consecutive application of CAD features in the candidate sequence. In examples, the optimizing of the objective function may comprise a minimization of the objective function. In such examples, rewarding a fitting of the discrete geometrical representation by a candidate sequence means that the objective function is a decreasing function of the fitting. By "an objective function which penalizes a complexity of a candidate sequence" it is meant that said objective function is configured so as to decrease the complexity of a candidate sequence selected by the optimization. In examples, the optimizing of the objective function may comprise a minimization of the objective function. In such examples, the complexity of the candidate sequence may be an increasing function of the complexity is an increasing function of a size of the candidate sequence, for example an increasing function of the number of features in the candidate sequence as discussed above.

As previously mentioned, the generating of the CAD feature tree is particularly relevant in the field of manufacturing CAD, that is, for software solutions to assist design processes and manufacturing processes, whereby the objective is to produce a physical product corresponding to a designed CAD model (e.g., a CAD 3D model). Within this context, the CAD model represents a manufacturing product, that may be manufactured downstream to its design. The method may thus be part of such a design and/or manufacturing process of a mechanical product. The method may be part of or may form a design process where the method forms the step of obtaining feature tree from the representation of a mechanical product. This step of obtaining the feature tree may form a step of CAE to CAD conversion, since the provided representation of the product may be a CAE model of the product and the method determines a sequence of CAD features that fits this model. Such sequence of CAD feature may form a CAD feature tree of the product, which is a CAD model of the product thereby obtained from the CAE model. The method may comprise constructing the feature tree from the determined sequence, *i.e.,* by encoding the sequence in the feature tree format. "Designing a manufacturing/mechanical product" designates any action or series of actions which is at least a part of a process of elaborating a modeled object of the manufacturing product/mechanical part/mechanical product.

The method thus generally manipulates modeled objects, such as a discrete geometrical representations and outputs a CAD feature tree of the discrete geometrical representation. A modeled object is any object defined by data stored e.g., in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, PLM and/or CAM system, as will be apparent from the definitions of such systems provided below.

By CAD solution (e.g., a CAD system or a CAD software), it is additionally meant any system, software or hardware, adapted at least for designing a modeled object on the basis of a graphical representation of the modeled object and/or on a structured representation thereof (e.g., a feature tree), such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g., non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 3D modeled object, e.g., representing a product such as a part or an assembly of parts, or possibly an assembly of products. The 3D modeled object may be a manufacturing product, i.e., a product to be manufactured. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e., increases the speed at which designers statistically accomplish their task). This speeds up the manufacturing process in the industry, as the design of the products is part of the manufacturing process.

The 3D modeled object may represent the geometry of a product to be manufactured in the real world subsequent to the completion of its virtual design with for instance a CAD/CAE software solution or CAD/CAE system, such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD/CAE software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the method may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

A CAD system may be history-based. In this case, a modeled object is further defined by data comprising a history of geometrical features. A modeled object may indeed be designed by a physical person (i.e., the designer/user) using standard modeling features (e.g., extrude, revolute, cut, and/or round) and/or standard surfacing features (e.g., sweep, blend, loft, fill, deform, and/or smoothing). Many CAD systems supporting such modeling functions are history-based system. This means that the creation history of design features is typically saved through an acyclic data flow linking the said geometrical features together through input and output links. The history-based modeling paradigm is well known since the beginning of the 80's. A modeled object is described by two persistent data representations: history and B-rep (i.e., boundary representation). The B-rep is the result of the computations defined in the history. The shape of the part displayed on the screen of the computer when the modeled object is represented is (e.g., a tessellation of) the B-rep. The history of the part is the design intent. Basically, the history gathers the information on the operations which the modeled object has undergone. The B-rep may be saved together with the history, to make it easier to display complex parts. The history may be saved together with the B-rep in order to allow design changes of the part according to the design intent. As discussed above, the generating of a CAD feature tree from a respective discrete geometrical representation provides an easy manipulation/editability and/or efficient storage, thereby improving the performance of a history-based CAD system.

By PLM system, it is additionally meant any system adapted for the management of a modeled object representing a physical manufactured product (or product to be manufactured). In a PLM system, a modeled object is thus defined by data suitable for the manufacturing of a physical object. These may typically be dimension values and/or tolerance values. For a correct manufacturing of an object, it is indeed better to have such values.

By CAE solution, it is additionally meant any solution, software or hardware, adapted for the analysis of the physical behavior of a modeled object. A well-known and widely used CAE technique is the Finite Element Model (FEM) which is equivalently referred to as CAE model hereinafter. An FEM typically involves a division of a modeled object into elements, i.e., a finite element mesh, which physical behaviors can be computed and simulated through equations. Such CAE solutions are provided by Dassault Systèmes under the trademark SIMULIA^{®}. Another growing CAE technique involves the modeling and analysis of complex systems composed a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA^{®}.

By CAM solution, it is meant any solution, software or hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or trademark DELMIA^{®}.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin, of an object to be manufactured with two objectives:
- checking the correct behavior of the object to be manufactured in a specific environment; and
- ensuring the manufacturability of the object to be manufactured.

PDM stands for Product Data Management. By PDM solution, it is meant any solution, software or hardware, adapted for managing all types of data related to a particular product. A PDM solution may be used by all actors involved in the lifecycle of a product: primarily engineers but also including project managers, finance people, salespeople and buyers. A PDM solution is generally based on a product-oriented database. It allows the actors to share consistent data on their products and therefore prevents actors from using divergent data. Such PDM solutions are provided by Dassault Systèmes under the trademark ENOVIA^{®}.

The method generates a sequence of CAD features (or a CAD feature tree constructed therefrom) from a provided discrete geometrical of a mechanical product. Thereby the modeled object taken as input by the method is a discrete geometrical representation of a mechanical product. The discrete geometrical representation is a data structure which comprises a discrete set of pieces of data. Each piece of data may specify an element of the product/mechanical part, and be referred to as a discrete element. The discrete geometrical representation may be 3D or alternatively 2D. Yet alternatively, the discrete geometrical representation may be both 3D and 2D, i.e. may comprise a 3D portion which is a 3D discrete geometrical representation and a 2D portion which is a discrete geometrical representation, such as a hybrid 3D-2D meshing (e.g. for modeling a product comprising both thin parts, modeled with the 2D portions, and thick parts, modeled with the 3D portions). The discrete geometrical representation may in examples comprise a number of such pieces of data higher than 100, 1000, or 10000.

In case of a 3D discrete geometrical representation, the 3D discrete geometrical representation may be a solid/volume 3D discrete geometrical representation of the mechanical product. In examples, such a representation may be a solid 3D finite element model (FEM), a 3D volume mesh (e.g. a 3D tetrahedral mesh), or a 3D point cloud. Optionally, the 3D mesh may be obtained from a conversion of a respective 3D point cloud by any known method, for example by triangulating the 3D point cloud (e.g., with a Delaunay triangulation). In such a case, each piece of data may represent a respective geometrical entity positioned in a 3D space such that the pieces of data form a solid representation of the mechanical product (i.e., "solid 3D discrete geometrical representation"). Each geometrical entity may represent a respective location (i.e., a material point) of the 3D object (in other words, a respective portion of material constitutive of a solid represented by the 3D object). In examples where the 3D discrete geometric representation is a 3D point cloud, each geometrical entity is a point residing in the volume occupied by the mechanical product. In examples where the 3D discrete geometric representation is a 3D mesh, each geometrical entity being a volume element of the mesh. The aggregation (i.e., union or juxtaposition) of the geometrical entities represents altogether the 3D object as a solid/volume.

The 3D discrete geometrical representation may alternatively be a skin 3D discrete geometrical representation, representing a skin of the mechanical product, such as a 3D surface mesh (e.g. a triangular surface mesh), a tessellation, or a 3D point cloud. Such a skin may represent at least part of the outer surface of the mechanical product. Optionally, the 3D mesh may be obtained from a conversion of a respective 3D point cloud by any known method, for example by triangulating the 3D point cloud (e.g., with a Delaunay triangulation). In such a case, each piece of data may represent a respective geometrical entity positioned in a 3D space, such that the pieces of data form a representation of the mechanical product's skin (i.e., "skin 3D discrete geometrical representation"). In such a case, each geometrical entity represents a respective location (i.e., a material point) on an outer surface of the 3D object (in other words, a respective portion of outer surface of the volume occupied by material constitutive of a solid represented by the object). In examples where the 3D discrete geometric representation is a 3D point cloud, each geometrical entity is a point residing on the skin of the mechanical product. In examples where the 3D discrete geometric representation is a 3D mesh, each geometrical entity being a tile or face of the mesh. The aggregation (i.e., union or juxtaposition) of the geometrical entities represents altogether at least part of the outer surface of the object.

In the case of a 2D discrete geometrical representation, each piece of data may represent a respective geometrical entity positioned in a 2D space. The 2D discrete geometrical representation may be a 2D point cloud, 2D finite element mesh, or any 2D mesh. In the case of 2D point cloud, the method may perform a tessellation on the provided 2D point cloud to obtain a 2D mesh. Each element of the 2D (e.g., finite element) mesh may be composed of straight segments or curved segments (e.g., spline or circular arcs). The discrete geometrical representation may be associated with one or more thickness value(s), for example a distribution of thickness value over its finite elements). In such examples, each geometrical entity being a line segment of the mesh. However, the face (of a mesh) may equivalently refer to such line segments as well. Such a 2D discrete geometrical representation may for example represent a generally planar product (which is a 3D object), such as a stamping part (e.g., with a constant thickness value) or a composite material part (e.g., with different thickness values). The discrete geometrical representation may be or may stem from a CAE model, also referred to as "finite element model (FEM)". The CAE model may stem from a CAD model representing the mechanical part/product, e.g. the method comprises at an initial stage obtaining the CAE model from the CAD model, for example using a meshing (e.g. triangulation) process. Conversely, a CAE model may be converted into a CAD model. The method may design/output a CAE model which may be then converted into a corresponding CAD model. The method may comprise, or may be included in wider process that comprises, or may form a solution to, (e.g. automatically) converting the CAE model designed/outputted by the method into a CAD model, by using any known (e.g. automatic) CAE to CAD conversion process that converts a CAE model into a CAD model.

The discrete geometrical representation (e.g., a point cloud, a surface mesh, or a mesh) may be determined from physical measurements on a real object, for example within a reconstruction process. Such a reconstruction process may comprise providing the real object, providing one or more physical sensors each configured for acquiring a respective physical signal, and acquiring one or more respective physical signals by operating the one or more physical sensors on the real object (i.e., scanning the real object with each sensor). The reconstruction may then automatically determine a discrete geometrical representation based on the measurements, according to any known technique. The one or more sensors may comprise a plurality of (e.g., RGB, and/or image or video) cameras and the determination may comprise a structure-from-motion analysis. The one or more sensors may alternatively or additionally comprise one or more depth sensors (e.g., on an RGB-depth camera) and the determination may comprise a reconstruction from depth data. The one or more depth sensors may for example comprise a laser (e.g., a lidar) or an ultrasound emitter-receiver.

The discrete geometrical representation may alternatively be obtained from a modeled object representing a skin (i.e., outer surface) of a solid or mechanical product for example by ray casting on the modeled object or tessellating the modeled object. The tessellating may be performed according to any modeled object rendering process. Such a rendering process may be coded on any CAD system in order to display a graphical representation of the modeled object. The modeled object may be designed or have been designed by a user with a CAD system.

As discussed above, the modeled object outputted by the method is a CAD model, for example comprising or consisting in a CAD feature tree (e.g., the CAD feature tree which corresponds to the determined sequence) and/or a B-rep (e.g., upon a conversion from the determined CAD feature tree).

The CAD model is feature-based (e.g. it comprises a CAD feature tree, and optionally a corresponding B-rep obtained by executing the CAD feature tree). A feature-based 3D or 2D model allows (e.g. during the determination of a manufacturing file or CAM file as discussed hereinafter) the detection and an automatic resolution of a geometry error in a CAD model such as a clash that will affect the manufacturing process. A clash is an interpenetration between two parts of a model for example due to their relative motion. Furthermore, this clash may sometimes only be detected via a finite element analysis based on the CAD feature-based model. Therefore, a resolution of a clash can be performed with or automatically by the CAD solution by iteratively modifying the parameters of the features and doing a finite element analysis.

As another example, a feature-based model allows (e.g. during the determination of a manufacturing file or CAM file as discussed hereinafter) an automatic creation of a toolpath for a machine via a computer numerical control (CNC). With CNC, each object to be manufactured gets a custom computer program, stored in and executed by the machine control unit, a microcomputer attached to the machine. The program contains the instructions and parameters the machine tool will follow. Mills, lathes, routers, grinders and lasers are examples of common machine tools whose operations can be automated with CNC.

The generation of a custom computer program from CAD files may be automated. Such generation may therefore be error prone and may ensure a perfect reproduction of the CAD model to a manufactured product. CNC is considered to provide more precision, complexity and repeatability than is possible with manual machining. Other benefits include greater accuracy, speed and flexibility, as well as capabilities such as contour machining, which allows milling of contoured shapes, including those produced in 3D or 2D designs.

The B-Rep (i.e., boundary representation) is a representation of a mechanical part. Specifically, the B-Rep is a persistent data representation describing the modeled object representing the mechanical part. The B-Rep may be the result of computations and/or a series of operations carried out during a designing phase of the modeled object representing the mechanical part. The shape of the mechanical part displayed on the screen of the computer when the modeled object is represented is (e.g. a tessellation of) the B-Rep. In examples, the B-Rep represents a part of the model object.

A B-Rep includes topological entities and geometrical entities. Topological entities are: face, edge, and vertex. Geometrical entities are 2D or 3D objects: surface, plane, curve, line, point. By definition, a face is a bounded portion of a surface, named the supporting surface. An edge is a bounded portion of a curve, named the supporting curve. A vertex is a point in 2D or 3D space. They are related to each other as follows. The bounded portion of a curve is defined by two points (the vertices) lying on the curve. The bounded portion of a surface is defined by its boundary, this boundary being a set of edges lying on the surface. The boundary of the edges of the face are connected by sharing vertices. Faces are connected by sharing edges. Two faces are adjacent if they share an edge. Similarly, two edges are adjacent if they share a vertex. In the CAD system, the B-Rep gathers in an appropriate data structure the "is bounded by" relationship, the relationship between topological entities and supporting geometries, and mathematical descriptions of supporting geometries. An internal edge of a B-Rep is an edge shared by exactly two faces. By definition, a boundary edge is not shared, it bounds only one face. By definition, a boundary face is bounded by at least one boundary edge. A B-Rep is said to be closed if all its edges are internal edges. A B-Rep is said to be open is it includes at least one boundary edge. A closed B-Rep is used to model a thick volume (e.g., a 3D volume) because it defines the inside portion of space (virtually) enclosing material. An open B-Rep is used to model a skin (e.g., a 3D skin), which represents an object (e.g., a 3D object) the thickness of which is sufficiently small to be ignored.

A key advantage of the B-Rep over any other representation types used in CAD modeling is its ability to represent arbitrary shapes exactly. All other representations in use, such as point clouds, distance fields and meshes, perform an approximation of the shape to represent by discretization. The B-Rep, on the other hand, contains surface equations that represent the exact design and therefore constitutes a true "master model" for further manufacturing, whether this be generation of toolpaths for CNC, or discretizing into the correct sample density for a given 3D Printer technology. In other words, by using a B-Rep, the 3D model may be an exact representation of the manufactured object. The B-Rep is also advantageous for simulating the behavior of a 3D model. In terms of stress, thermal, electromagnetic or other analysis, it supports local refinement of the simulation meshes to capture physical phenomena, and for kinematics it supports true contact modeling between curved surfaces. Finally, a B-Rep allows a small memory and/or file footprint. First, because the representation contains surfaces based only on parameters. In other representations such as meshes, the equivalent surface comprises up to thousands of triangles. Second, because a B-Rep does not contain any history-based information.

The method may be included in a production process, which may comprise, after performing the method, producing a physical product corresponding to the modeled object outputted by the method. The production process may comprise the following steps:
- (e.g. automatically) applying the method, thereby obtaining the CAD model outputted by the method; and
- using the obtained CAD model for manufacturing the mechanical product.

Using a CAD model for manufacturing designates any real-world action or series of action that is/are involved in/participate to the manufacturing of the mechanical product represented by the CAD model. Using the CAD model for manufacturing may for example comprise the following steps:
- editing the obtained CAD model;
- performing simulation(s) based on the CAD model or on a corresponding CAE model (e.g. the CAE model from which the CAD model stems, after a CAE to CAD conversion process), such as simulations for validation of mechanical, use and/or manufacturing properties and/or constraints (e.g. structural simulations, thermodynamics simulation, aerodynamic simulations);
- editing the CAD model based on the results of the simulation(s);
- (i.e. depending on the manufacturing process used, the production of the mechanical product may or may not comprise this step) (e.g. automatically) determining a manufacturing file/CAM file based on the (e.g. edited) CAD model, for production/manufacturing of the manufacturing product;
- sending the CAD file and/or the manufacturing file/CAM file to a factory; and/or
- (e.g. automatically) producing/manufacturing, based on the determined manufacturing file/CAM file or on the CAD model, the mechanical product originally represented by the model outputted by the method. This may include feeding (e.g. automatically) the manufacturing file/CAM file and/or the CAD file to the machine(s) performing the manufacturing process.

This last step of production/manufacturing may be referred to as the manufacturing step or production step. This step manufactures/fabricates the part/product based on the CAD model and/or the CAM file, e.g. upon the CAD model and/or CAD file being fed to one or more manufacturing machine(s) or computer system(s) controlling the machine(s). The manufacturing step may comprise performing any known manufacturing process or series of manufacturing processes, for example one or more additive manufacturing steps, one or more cutting steps (e.g. laser cutting or plasma cutting steps), one or more stamping steps, one or more forging steps, one or more molding steps, one or more machining steps (e.g. milling steps) and/or one or more punching steps. Because the design method improves the design of a model (CAE or CAD) representing the part/product, the manufacturing and its productivity are also improved.

Editing the CAD model may comprise, by a user (i.e. a designer), performing one or more of the CAD models, e.g. by using a CAD solution. The modifications of the CAD model may include one or more modifications each of a geometry and/or of a parameter of the CAD model. The modifications may include any modification or series of modifications performed on a feature tree of the model (e.g. modification of feature parameters and/or specifications) and/or modifications performed on a displayed representation of the CAD model (e.g. a B-rep). The modifications are modifications which maintain the technical functionalities of the part/product, i.e. the user performs modifications which may affect the geometry and/or parameters of the model but only with the purpose of making the CAD model technically more compliant with the downstream use and/or manufacturing of the part/product. Such modifications may include any modification or series of modification that make the CAD model technically compliant with specifications of the machine(s) used in the downstream manufacturing process. Such modifications may additionally or alternatively include any modification or series of modification that make the CAD model technically compliant with a further use of the product/part once manufactured, such modification or series of modifications being for example based on results of the simulation(s).

The CAM file may comprise a manufacturing step up model obtained from the CAD model. The manufacturing step up may comprise all data required for manufacturing the mechanical product so that it has a geometry and/or a distribution of material that corresponds to what is captured by the CAD model, possibly up to manufacturing tolerance errors. Determining the production file may comprise applying any CAM (Computer-Aided Manufacturing) solution for (e.g. automatically) determining a production file from the CAD model (e.g. any automated CAD-to-CAM conversion algorithm).

The product/part may be an additive manufacturable part, i.e. a part to be manufactured by additive manufacturing (i.e. 3D printing). In this case, the production process does not comprise the step of determining the CAM file and directly proceeds to the producing/manufacturing step, by directly (e.g. and automatically) feeding a 3D printer with the CAD model. 3D printers are configured for, upon being fed with a CAD model representing a mechanical product (e.g. and upon launching, by a 3D printer operator, the 3D printing), directly and automatically 3D print the mechanical product in accordance with the CAD model. In other words, the 3D printer receives the CAD model, which is (e.g. automatically) fed to it, reads (e.g. automatically) the CAD model, and prints (e.g. automatically) the part by adding together material, e.g. layer by layer, to reproduce the geometry and/or distribution of material captured by the CAD model. The 3D printer adds the material to thereby reproduce exactly in reality the geometry and/or distribution of material captured by the CAD model, up to the resolution of the 3D printer, and optionally with or without tolerance errors and/or manufacturing corrections. The manufacturing may comprise, e.g. by a user (e.g. an operator of the 3D printer) or automatically (by the 3D printer or a computer system controlling it), determining such manufacturing corrections and/or tolerance errors, for example by modifying the CAD file to match specifications of the 3D printer. The production process may additionally or alternatively comprise determining (e.g. automatically by the 3D printer or a computer system controlling it) from the CAD model, a printing direction, for example to minimize overhang volume (such as described in European patent No. 3327593, which is incorporated herein by reference), a layer-slicing (i.e., determining thickness of each layer, and layer-wise paths/trajectories and other characteristics for the 3D printer head (e.g., for a laser beam, for example the path, speed, intensity/temperature, and other parameters).

The product/part may alternatively be a machined part (i.e. a part manufactured by machining), such as a milled part (i.e. a part manufactured by milling). In such a case, the production process may comprise a step of determining the CAM file. This step may be carried out automatically, by any suitable CAM solution to automatically obtain a CAM file from a CAD model of a machined part. The determination of the CAM file may comprise (e.g. automatically) checking if the CAD model has any geometric particularity (e.g. error or artefact) that may affect the production process and (e.g. automatically) correcting such particularities. For example, machining or milling based on the CAD model may not be carried out if the CAD model still comprises sharp edges (because the machining or milling tool cannot create sharp edges), and in such a case the determination of the CAM file may comprise (e.g. automatically) rounding or filleting such sharp edges (e.g. with a round or fillet radius that corresponds, e.g. substantially equals up to a tolerance error, the radius of the cutting head of the machining tool), so that machining or milling based on the CAD model can be done. More generally, the determination of the CAM file may automatically comprise rounding or filleting geometries within the CAD model that are incompatible with the radius of the machining or milling tool, to enable machining/milling. This check and possible corrections (e.g. rounding or filleting of geometries) may be carried out automatically as previously discussed, but also, by a user (e.g. a machining engineer), which performs the correction by hand on a CAD and/or CAM solution, e.g. the solution constraining the user to perform corrections that make the CAD model compliant with specifications of the tool used in the machining process.

Further to the check, the determination of the CAM file may comprise (e.g. automatically) determining the machining or milling path, i.e. the path to be taken by the machining tool to machine the product. The path may comprise a set of coordinates and/or a parameterized trajectory to be followed by the machining tool for machining, and determining the path may comprise (e.g. automatically) computing these coordinates and/or trajectory based on the CAD model. This computation may be based on the computation of a boundary of a Minkowski subtraction of the CAD model by a CAD model representation of the machining tool, as for example discussed in European Patent Application EP21306754.9 filed on 13 December 2021 by Dassault Systèmes, and which is incorporated herein by reference. It is to be understood that the path may be a single path, e.g. that the tool continuously follows without breaking contact with the material to be cut. Alternatively, the path may be a concatenation of a sequence sub-paths to be followed in a certain order by the tool, e.g. each being continuously followed by the tool without breaking contact with the material to be cut. Optionally, the determination of the CAM file may then comprise (e.g. automatically) setting machine parameters, including cutting speed, cut/pierce height, and/or mold opening stroke, for example based on the determined path and on the specification of the machine. Optionally, the determination of the CAM file may then comprise (e.g. automatically) configuring nesting where the CAM solution decides the best orientation for a part to maximize machining efficiency.

In this case of a machining or milling part, the determining of the CAM file thus results in, and outputs, the CAM file comprising a machining path, and optionally the set machine parameters and/or specifications of the configured nesting. This outputted CAM file may be then (e.g. directly and automatically) fed to the machining tool and/or the machining tool may then (e.g. directly and automatically) be programmed by reading the file, upon which the production process comprises the producing/manufacturing step where the machine performs the machining of the product according to the production file, e.g. by directly and automatically executing the production file. The machining process comprises the machining tool cutting a real-world block of material to reproduce the geometry and/or distribution of material captured by the CAD model, e.g. up to a tolerance error (e.g. tens of microns for milling).

The product/part may alternatively be a molded part, i.e. a part manufactured by molding (e.g. injection-molding). In such a case, the production process may comprise the step of determining the CAM file. This step may be carried out automatically, by any suitable CAM solution to automatically obtain a CAM file from a CAD model of a molded part. The determining of the CAM file may comprise (e.g. automatically) performing a sequence of molding checks based on the CAD model to check that the geometry and/or distribution of material captured by the CAD model is adapted for molding, and (e.g. automatically) performing the appropriate corrections if the CAD model is not adapted for molding. Performing the checks and the appropriate corrections (if any) may be carried out automatically, or, alternatively, by a user (e.g. a molding engineer), for example using a CAD and/or CAM solution that allows a user to perform the appropriate corrections on the CAD model but constraints him/her corrections that make the CAD model compliant with specifications of the molding tool(s). The checks may include: verifying that the virtual product as represented by the CAD model is consistent with the dimensions of the mold and/or verifying that the CAD model comprises all the draft angles required for demolding the product, as known per se from molding. The determining of the CAM file may then further comprise determining, based on the CAD model, a quantity of liquid material to be used for molding, and/or a time to let the liquid material harden/set inside the mold, and outputting a CAM file comprising these parameters. The production process then comprises (e.g. automatically) performing the molding based on the outputted file, where the mold shapes, for the determined hardening time, a liquid material into a shape that corresponds to the geometry and/or distribution of material captured by the CAD model, e.g. up to a tolerance error (e.g. up to the incorporation of draft angles or to the modification of draft angles, for demolding).

The product/part may alternatively be a stamped part, also possibly referred to as "stamping part", i.e. a part to be manufactured in a stamping process. The production process may in this case comprise (e.g. automatically) determining a CAM file based on the CAD model. The CAD model represents the stamping part, e.g. possible with one or more flanges if the part is to comprise some, and possibly in this latter case with extra material to be removed so as to form an unfolded state of one or more flanges of the part, as known per se from stamping. The CAD model thus comprises a portion that represents the part without the flanges (which is the whole part in some cases) and possibly an outer extra patch portion that represents the flanges (if any), with possibly the extra material (if any). This extra patch portion may present a g2-continuity over a certain length and then a g1-continuity over a certain length.

The determination of the CAM file may in this stamping case comprise (e.g. automatically) determining parameters of the stamping machine, for example a size of a stamping die or punch and/or a stamping force, based on the geometry and/or distribution of material of the virtual product as captured by the CAD model. If the CAD model also comprises the representation of the extra material to be removed so as to form an unfolded state of one or more flanges of the part, the extra material to be removed may for example be cut by machining, and determining the CAM file may also comprise determining a corresponding machining CAM file, e.g. as discussed previously. If there are one or more flanges, determining the CAM file may comprise determining geometrical specifications of the g2-continuity and g1-continuity portions that allow, after the stamping itself and the removal of the extra material, to fold in a folding process the flanges towards an inner surface of the stamped part and along the g2-continuity length. The CAM file thereby determined may thus comprise: parameters of the stamping tool, optionally said specifications for folding the flanges (if any), and optionally a machining production file for removing the extra material (if any).

The stamping production process may then output, e.g. directly and automatically, the CAM file, and perform the stamping process (e.g. automatically) based on the file. The stamping process may comprise stamping (e.g. punching) a portion of material to form the product as represented by the CAD file, that is possibly with the unfolded flanges and the extra material (if any). Where appropriate, the stamping process may then comprise cutting the extra material based on the machining production file and folding the flanges based on said specifications for folding the flanges, thereby folding the flanges on their g2-continuity length, and giving a smooth aspect to the outer boundary of the part. In this latter case, the shape of the part once manufactured differ from its virtual counterpart as represented by the CAD model in that the extra material is removed and the flanges are folded, whereas the CAD model represents the part with the extra material and the flanges in an unfolded state.

The method is now further discussed.

In examples, the objective function comprises (*e.g.* consists in, *e.g.* up to a multiplication by a scaling factor) a subtraction of the complexity of a candidate sequence by a term rewarding a fitting of the discrete geometrical representation by the candidate sequence. The term rewarding a fitting may be weighted by a weighting parameter. For example, the term may comprise a function of the candidate sequence representing a fitting of the discrete geometrical representation by the candidate sequence multiplied by a weighting parameter.

In examples, the objective function may be of the type: 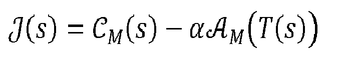 where s is the candidate sequence, $J \left(s\right)$ is the objective function, ${C}_{M} \left(s\right)$ is the complexity of the candidate sequence and ${αA}_{M} \left(T\left(s\right)\right)$ is the term which rewards fitting, *α* being a weighting parameter, and *T(s)* is a CAD feature tree resulting from the candidate sequence s. The function ${A}_{M} \left(.\right)$ determines a fitting between the resulting CAD feature *T(s)* and the provided discrete geometrical representation *M.* For example when the candidate sequence s is the sequence (*f*₁, ··· , *fₙ*), the resulting feature may be according to a map of the type below 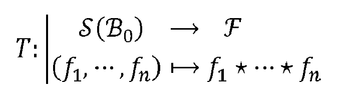 where the notation 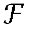 (respectively, ${F}_{e}$) denotes a set of all features (respectively all elementary features), ${B}_{0} ⊂ {F}_{e}$ is a finite subset of the set of elementary features ${F}_{e}$, and $S \left({B}_{0}\right)$ denotes the set of all possible features sequences from ${B}_{0}$. The map *T* may compute the resulting feature from the sequence $s = \left({f}_{1}, ⋯, {f}_{n}\right) ∈ {\left({B}_{0}\right)}^{n}$ as *T*(*s*) *= f*₁ ★ ··· ★ *fₙ.* The method may define the operation ★ on 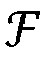 as the following: $⋆ : | \begin{matrix}F \times F \to F \\ \left(f, g\right) ↦ f ⋆ g = \left(\left({f}_{+}\{g}_{-}\right)⋃{g}_{+}, \left({f}_{-}\{g}_{+}\right)⋃{g}_{-}\right)\end{matrix}$ where a (general) feature *f* is a pair of two disjoint open domains *f₋* and *f*₊ of ${ℝ}^{2}$, where *d* = 2 or 3, defined as *f* = (*f*₋, *f*₊) where *f*₋ is an erasing volume, and *f*₊ is an additive volume as discussed above.

In the objective function discussed above, ${A}_{M} \left(f\right)$ is a function that measures how close the feature *f* (e.g., the CAD feature tree *T*(*s*)) is to the discrete geometrical representation *M*. The weighting parameter *α* may have a large and positive value. This improves the method in compromising between the desired accuracy and complexity of the generated CAD feature tree by controlling an effect of each of the complexity and the fitting in the value of the objective function. Increasing the value of the weighting parameter further increases the effect of the fitting in the value of the objective function. In examples, the value of the weighting parameter may be any value in the interval [1, N] where N is the number of (elementary) CAD features in the provided set.

In examples, the optimization of the objective function may be under a constraint that each of the determined one or more sequences have a fitting of the discrete geometrical representation that is larger than a fitting threshold. In other words, the method may explore the provided set of CAD features in order to optimize the objective function (e.g., the objective function J(s) discussed above) and only accept the determined sequences with a fitting higher than the fitting threshold. Such sequences may form a set of admissible sequences.

In examples where the objective function is of the type discussed above as $I \left(s\right) = {C}_{M} \left(s\right) - {αA}_{M} \left(T\left(s\right)\right)$, the optimizing of the objective function may comprise minimizing the objective function under the constraint discussed above. Such a minimization may be of the type (*e.g*. may consist in solving the following minimization problem, or a similar problem such as the same problem up to a multiplication by a scaling parameter): 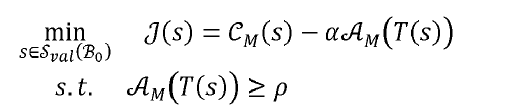 where *ρ* is the fitting threshold, ${B}_{0}$ is the provided set of CAD features, and ${S}_{val} \left({B}_{0}\right)$ is a subset of valid subsequences of $S \left({B}_{0}\right)$ which is a set of all possible features sequences from ${B}_{0}$. The subset of valid subsequences may be a subset built upon a strict partial order relation on ${B}_{0}$ as discussed below.

In examples, the fitting threshold may be normalized in an interval, for example between 0 and 1. The fitting threshold may depend on noise level in inputs, for example in the provided discrete geometrical representation when said discrete geometrical representation is a result of scanning of the real object. In such examples, a value of the fitting threshold may be close to zero when the noise level is small and close to one when the noise level is high. This improves the method by enabling controlling the effect of the noise of the input in the optimization problem, by increasing the effect of fitting (i.e., accuracy) of the determined sequence when the input is accurate (i.e., with low level of noise) and decreasing the effect of fitting for a noisy input.

In examples, the rewarding of a fitting is based on a ratio between a surface area of a covering of the discrete geometrical representation by the candidate sequence, and a surface area of the discrete geometrical representation. The covering of the discrete geometrical representation by the candidate sequence may be an intersection of the discrete geometrical representation and the boundary of a feature resulting from the candidate sequence (or equivalently a feature formed by the feature tree resulting from the candidate sequence).

In examples, the complexity is of the type 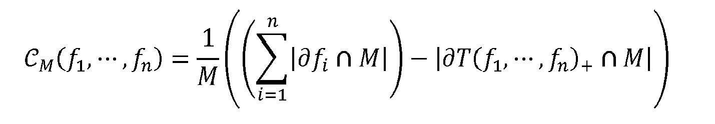 where ${C}_{M}$ is the complexity of a sequence s of CAD features (*f*₁, ··· , *fₙ*). ∂*T*(*f*₁, ··· , *fₙ*)₊ is a boundary of a feature resulting from the sequence *s, n* is the number of CAD features in the sequence s, ∂*fᵢ* is a boundary of the CAD feature *fᵢ*, *∂fᵢ* ∩ *M* is an intersection between the boundary *∂fᵢ* and the discrete geometrical representation *M,* and the function |*N*| outputs a the surface area of the argument *N.* The surface area of the argument *N* may be a Hausdorff measure of dimension 2 of *N*.

In examples, the optimization is performed on a subset of candidate sequences each consisting of non-repeated CAD features of the set, and/or CAD features of the set ordered with respect to a feature order. By "each candidate sequence consists of non-repeated CAD features" it is meant that there are not two features in said candidate sequence which are the same. In other words, the presence of a feature in the candidate sequence for a first time excludes the presence of the feature for a second time in the candidate sequence. By "each candidate sequence consists of CAD features of the set ordered with respect to a feature order" it is meant that the features (i.e., elementary features) of said candidate sequence are taken from the provided set of CAD features and are constrained to follow said order. In other words, every two features of said candidate sequence are the features which are present in the provided set such that a first feature comes before a second feature of the two if the first feature has a higher order compared to the second feature according to the feature order. The feature order may reward a covering of the discrete geometrical representation by the candidate sequence. The feature order may be according to any known partial order (e.g., any strict partial order). For example, the feature order may order a first CAD feature relative to a second CAD feature such that the first CAD feature upon being added to a candidate sequence, provides a better fitting of the discrete geometrical representation and/or less complexity of the resulting sequence (i.e., the sequence upon adding the first feature to said candidate sequence) than the second CAD feature. In examples, the feature order may order a first CAD feature relative to a second feature when the first CAD feature erases at least a part of a surface covered by the second CAD feature and covers a surface that is not erased by the second CAD feature. This improves the generation of the CAD feature tree by enabling the exclusion of adding CAD features to a sequence of a lower order, i.e., features which do not efficiently contribute to the quality (e.g., fitting) of the generated CAD feature tree. Furthermore, the ordering reduces the number of potential CAD features to be added thereby improving the computational efficiency of the method.

In examples, the determining of the one or more sequences of CAD features may comprise iteratively building the one or more sequences, by iterations as the following: at each iteration the method may build a subset of sequence of CAD features where each sequence of the subset is a respective completion of a respective intermediate sequence built at the previous iteration. By a completion of a given sequence it is meant a sequence that has the given sequence as a strict subsequence at its beginning. For example, a completion of a sequence s = (*f*₁, ··· , *fₖ*) is a sequence *s'* = (*f*₁, ··· , *fₖ*, *f*_{*k*+1}, ··· , *fₘ*) (with *m* > *k*). The length of the completion is the difference of the lengths of s and *s'* (so at least 1). Each iteration may then build one or more next intermediate sequences by selecting them in the subset (*F*_{*i*+1}) based on an optimization score (*h*) of the respective intermediate sequence (*s*'). By selecting (one or more next intermediate sequences in the subset) "based on an optimization score of the respective intermediate sequence" it is meant that the method may select the one or more next intermediate sequences by selecting the respective intermediate sequences with the highest optimization score. In examples, the method may select k intermediate sequences from the subset with highest optimization score. The method may comprise providing the value of k by a user or a setting it to a default value. The value of k may be a value in an interval of [1, 20] or preferably in an interval of [5, 10].

In examples, the optimization score of an intermediate sequence is a subtraction of a fitting upper bound of the intermediate sequence by the complexity of the intermediate sequence. The fitting upper bound (or equivalently an accuracy upper bound function) may be a function which can be computed efficiently. In examples, the fitting upper bound may be a theoretical cover according to European Patent Application filed on June 27, 2022, by DASSAULT SYSTEMES and titled "CAD FEATURE TREE GENERATION", which is incorporated herein by reference. As computing the fitting may be computationally costly, this constitutes an efficient solution to substitute the fitting by a fitting upper bound.

In examples, each sequence of the built subset has a fitting upper bound larger than a fitting upper bound threshold. In other words, the method only selects the intermediate sequences which have a fitting better than a fitting upper bound threshold. The fitting upper bound threshold may be same as the fitting threshold discussed above.

In examples, the built respective completions may belong to a subset of candidate completions. Each candidate completion of the subset may consist of non-repeated CAD features of the set, and/or CAD features of the set ordered with respect to a feature order. The feature order may reward a covering of the discrete geometrical representation by the candidate sequence. The feature order may according to any known partial order, thereby forming a partially-ordered set from the subset of candidate sequences. For example, the feature order may order a first CAD feature relative to a second CAD feature such that the first order, upon added to a candidate sequence, provides a better fitting of the discrete geometrical representation and/or less complexity of the resulting sequence (i.e., the sequence upon adding the first feature to said candidate sequence). In examples, the feature order may order a first CAD feature relative to a second feature when the first CAD feature erases at least a part of a surface covered by the second CAD feature and covers a surface that is not erased by the second CAD feature. This improves the generation of the CAD features tree by enabling the exclusion of adding CAD feature to the sequence of a lower order, i.e., features which do not efficiently contribute to the quality (e.g., fitting) of the generated CAD feature tree. Furthermore, the ordering reduces the number of potential CAD features to be added thereby improving the computational efficiency of the method.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g., one for the program, and possibly one for the database).

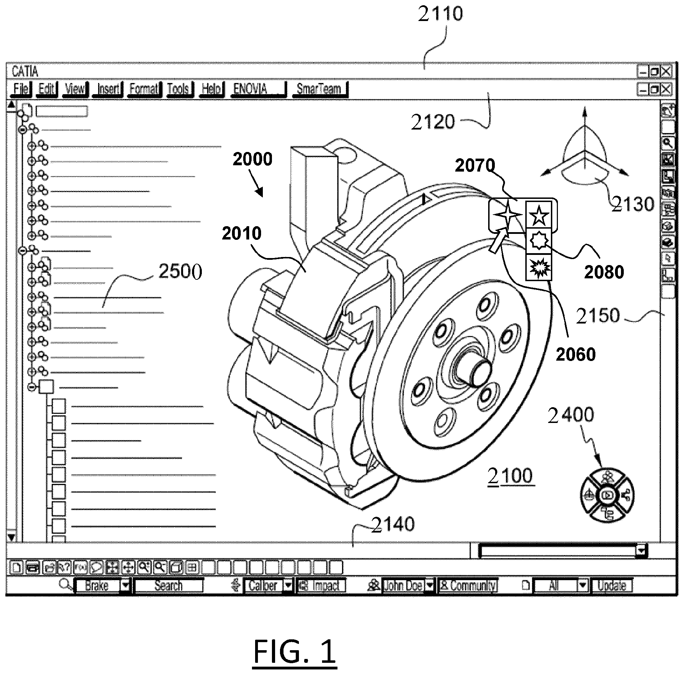

FIG. 1 shows an example of the GUI of the system, wherein the system is a CAD system. The model 2000 is an example of the discrete geometrical representation provided to the method.

The GUI 2100 may be a typical CAD-like interface, having standard menu bars 2110, 2120, as well as bottom and side toolbars 2140, 2150. Such menu- and toolbars contain a set of user-selectable icons, each icon being associated with one or more operations or functions, as known in the art. Some of these icons are associated with software tools, adapted for editing and/or working on the modeled object 2000 displayed in the GUI 2100. The software tools may be grouped into workbenches. Each workbench comprises a subset of software tools. In particular, one of the workbenches is an edition workbench, suitable for editing geometrical features of the modeled product 2000. In operation, a designer may for example pre-select a part of the object 2000 and then initiate an operation (e.g. change the dimension, color, etc.) or edit geometrical constraints by selecting an appropriate icon. For example, typical CAD operations are the modeling of the punching, or the folding of the 3D modeled object displayed on the screen. The GUI may for example display data 2500 related to the displayed product 2000. In the example of the figure, the data 2500, displayed as a "feature tree", and their 3D representation 2000 pertain to a brake assembly including brake caliper and disc. The displayed feature-tree data may be the generated CAD feature tree obtained by the method. The GUI may further show various types of graphic tools 2130, 2070, 2080 for example for facilitating 3D orientation of the object, for triggering a simulation of an operation of an edited product or render various attributes of the displayed product 2000. A cursor 2060 may be controlled by a haptic device to allow the user to interact with the graphic tools.

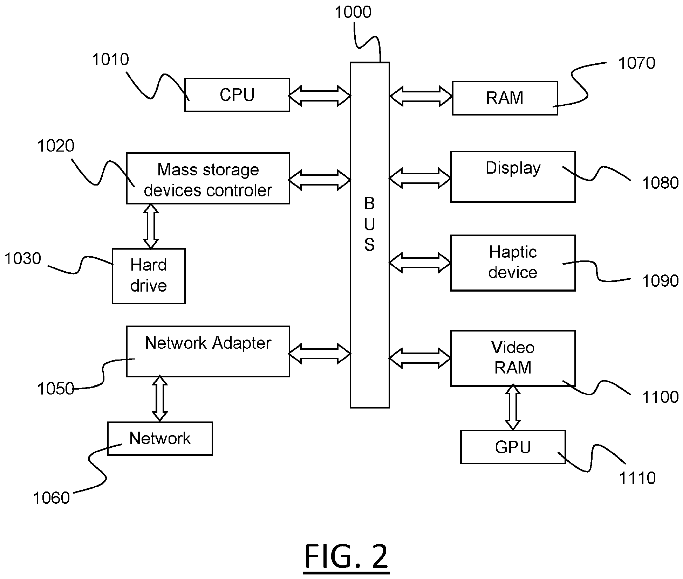

FIG. 2 shows an example of the system, wherein the system is a client computer system, e.g. a workstation of a user.

The client computer of the example comprises a central processing unit (CPU) 1010 connected to an internal communication BUS 1000, a random-access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard, or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

Implementations of the methods are now discussed.

The implementations are given (i.e., provided) a certain set of elementary CAD primitives, like extrusions, revolutions, sweeps, etc., coupled with corresponding Boolean operations, like splits, unions, subtractions, etc. The implementations consider each elementary feature to be one of such couples. The implementations seek to use the given features to build a CAD model that is the closest possible to a certain mesh or point cloud that are also given as an input. More precisely, the implementations create a feature tree, i.e. combine the different features in a certain order, so that the result of the final combination is a volume whose boundary is close to the input surface mesh or the point cloud.

The implementations focus on combinations that take the form of sequences. In other words, the implementations consider feature trees consisting of a choice of the features to use amongst all the possible elementary features given as inputs, and then an ordering of these chosen features specifying an order between the chosen operations (i.e., which operation should be done first, second, etc.). The ordering often has significant effect on the result.

Seeking such a goal, the implementations rely on an efficient exploration strategy to look at some possible sequences that can be built from the starting feature set (i.e., the provided set of CAD features). In order to avoid significant increase of the combinatorial complexity the implementations do not perform an exhaustive search in the starting set, however the implementations exploit efficient searching algorithm, for example, a beam search algorithm. The exploration (i.e., search) consists in building sequences from bottom up, at each step choosing a certain number of promising candidates features to continue the sequence. This choice is based on several criteria that can give estimations on how good the final feature tree is expected to be if a certain candidate is chosen at the current step. The notion of "good" feature tree depends on the application, and in particular is related to a concept of accuracy (i.e., a good fitting to the input model, e.g., a mesh, or a point cloud) as well as a concept of feature tree complexity. The implementations transform the concepts of accuracy and tree complexity into quantities which enable numerical evaluation of quality of a feature tree (and select the best one).

The implementations constitute a general solution for CAD feature tree generation through different notions of accuracy and complexity in order to favor preferred designing patterns that serve applications of the implementations. For example, an implementation of the method may set a desired accuracy and/or complexity of such that the design conforms to a certain legacy of CAD models, to obtain the most accurate geometry possible, or to obtain a model that is the most easily simulable, i.e. the model that best conforms to meshing and/or (physical) simulations requirements. For example, the implementations may obtain a CAD feature tree such that a model based on the CAD feature is easily compatible to build a volume mesh, in order to use for example a Finite Element Method, a Finite Volume Method, or a Finite Differences Method for simulations. Indeed, the CAD features of the obtained optimal feature tree give insights on how to realize such a volume mesh, for example by decomposing the model into simple bricks based on said features, and/or according to dimensions and axes that can be used by the meshing method. The implementations provide a CAD feature tree generation which is computationally fast. Thus, they allow the automatic generation/reconstruction of complex CAD models with improved quality (i.e., accuracy). By only considering CAD models that are built from a sequence of elementary operators, the implementations slightly reduce the complexity of models that can be obtained accurately, while they reduce the complexity of the optimization by facilitating the exploration.

The implementations are not limited to volume fitting as a fitting metric, but are able to use any other metric to compare the fitting quality of the CAD reconstruction with respect to the input.

The implementations use the notation of *M* for a 2-manifold embedded in ${ℝ}^{3}$ which signifies an input geometry (e.g., a point cloud, or a surface mesh). As discussed above, the implementations seek to build a CAD model that fits *M* in an optimal way. In other words, *M* designates the provided 3D discrete geometrical representation.

A (general) feature *f* is a pair of two disjoint open 3D domains *f*₋ and *f*₊ of ${ℝ}^{3}$, defined as $f = \left({f}_{-}, {f}_{+}\right)$ where *f*₋ is an erasing volume, and *f*₊ is an additive volume. The feature *f* is called elementary if *f*₋ = ∅ or *f*₊ = ∅. The notation 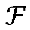 (respectively, ${F}_{e}$) denotes a set of all features (respectively, all elementary features).

To combine the features, the implementations define operation ★ on 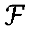 as the following: $⋆ : | \begin{matrix}F \times F \to F \\ \left(f, g\right) ↦ f ⋆ g = \left(\left({f}_{+}\{g}_{-}\right)⋃{g}_{+}, \left({f}_{-}\{g}_{+}\right)⋃{g}_{-}\right)\end{matrix}$

Let ${B}_{0} ⊂ {F}_{e}$ be a finite subset of the set of elementary features ${F}_{e}$. A feature sequence from ${B}_{0}$ is a sequence: $s = \left({f}_{1}, ⋯, {f}_{n}\right) ∈ {\left({B}_{0}\right)}^{n}$ such that ∀ 1 ≤ *i* ≠ *j* ≤ *n, fᵢ* ≠ *fⱼ.* In other words, each sequence cannot include a certain feature more than once.

Let $S \left({B}_{0}\right)$ denote the set of all possible features sequences from ${B}_{0}$. Here "possible feature sequences" means all existing feature trees (in the mathematical sense) from B0 features. Each of such sequences may include any of pad features, pocket features, shaft features, groove features, split features, and/or sweep features.

The implementations define the map: $T : | \begin{matrix}S \left({B}_{0}\right) \to F \\ \left({f}_{1}, ⋯, {f}_{n}\right) ↦ {f}_{1} ⋆ ⋯ ⋆ {f}_{n}\end{matrix}$ that computes the result feature from a features sequence.

In order to make the exploration easier, the implementations may restrain the set of sequences by choosing a subset of "valid" sequences ${S}_{val} \left({B}_{0}\right) ⊂ S \left({B}_{0}\right)$. Any of ${S}_{val} \left({B}_{0}\right)$ or $S \left({B}_{0}\right)$ may be the provided set of CAD features. The implementations may choose said subset by defining a partial order ≺ on the basket of initial features ${B}_{0}$. The implementations may define such a (strict) partial order according to already mentioned European Patent Application filed on June 27, 2022, by DASSAULT SYSTEMES and titled "CAD FEATURE TREE GENERATION".

In such implementations, a sequence $s = \left({f}_{1}, ⋯, {f}_{k}\right) ∈ S \left({B}_{0}\right)$ belongs in ${S}_{val} \left({B}_{0}\right)$ if and only if the sequence does not include two features with *fⱼ* ≺ *fᵢ* for 1 ≤ *i* < *j* ≤ *k.*

A completion of a sequence $s = \left({f}_{1}, ⋯, {f}_{k}\right) ∈ {S}_{val} \left({B}_{0}\right)$ is a sequence s' = $\left({f}_{1}, ⋯, {f}_{k}, {f}_{k + 1}, ⋯, {f}_{m}\right) ∈ {S}_{val} \left({B}_{0}\right)$ (with *m* > *k*). The length of the completion is the difference of the lengths of *s* and *s'* (so at least 1). A sequence $s ∈ S \left({B}_{0}\right)$ is maximal if it has no completion.

The implementations may take into account an accuracy by a function as a map ${A}_{M} : F \to \left[0,1\right]$ where ${A}_{M} \left(f\right)$ measures how close the feature *f* is from the input geometry M. The closer ${A}_{M} \left(f\right)$ gets to 1, the more accurate *f* is with respect to *M.* For instance, if M is a surface mesh, one may use: ${A}_{M} \left(f\right) = \frac{\left|\partial {f}_{+}∩M\right|}{\left|M\right|}$ as a surface covering score according to already mentioned European Patent Application filed on June 27, 2022, by DASSAULT SYSTEMES and titled "CAD FEATURE TREE GENERATION".

The implementations may take into account a complexity function as a map ${C}_{M} : S \left({B}_{0}\right) \to {ℝ}_{+}$ that satisfies: ${C}_{M} \left({f}_{1}, ⋯, {f}_{k}\right) \leq {C}_{M} \left({f}_{1}, ⋯, {f}_{k}, {f}_{k + 1}\right) ∀ \left({f}_{1}, ⋯, {f}_{k}, {f}_{k + 1}\right) ∈ S \left({B}_{0}\right)$.

The implementations may use the following function for the accuracy: ${C}_{M} \left({f}_{1}, ⋯, {f}_{n}\right) = \frac{1}{M} \left(\left({\sum }_{i = 1}^{n} \left|\partial {f}_{{i}_{+}}∩M\right|\right)-\left|\partial T{\left({f}_{1}⋆⋯⋆{f}_{n}\right)}_{+}∩M\right|\right)$

The implementations may define the following optimization problem to solve $\begin{matrix}{min}_{s ∈ {S}_{val} \left({B}_{0}\right)} \\ s . t .\end{matrix} \begin{matrix}J \left(s\right) = {C}_{M} \left(s\right) - {αA}_{M} \left(T\left(s\right)\right) \\ {A}_{M} \left(T\left(s\right)\right) \geq ρ\end{matrix}$

By ${S}_{ad} \left({B}_{0}\right) ⊂ {S}_{val} \left({B}_{0}\right)$, the implementations denote the set of sequences s of ${S}_{val} \left({B}_{0}\right)$ that satisfy the constraint ${A}_{M} \left(T\left(s\right)\right) \geq ρ$, i.e., a set of "admissible sequences". Here ${αA}_{M} \left(T\left(s\right)\right)$ is the term which rewards the fitting of *T(s)* and *M* and ${C}_{M} \left(s\right)$ is the complexity of the sequence s. Furthermore, *ρ* is the fitting threshold as discussed above.

The implementations perform an efficient exploration strategy based on a heuristic score. The performing of an efficient exploration strategy allows the implementations to above an exhaustive search for the admissible sequences which is often computationally expensive.

For defining the heuristic score, let ${A}^{˜} : {S}_{val} \left({B}_{0}\right) \to \left[0,1\right]$ be a function such that for any sequence (*f*₁, ··· , *f*_{*k*+1}): ${A}^{˜} \left({f}_{1}, ⋯, {f}_{k}\right) \geq {A}^{˜} \left({f}_{1}, ⋯, {f}_{k}, {f}_{k + 1}\right)$ and ${A}^{˜} \left(s\right) \geq A \left(s\right) ∀ s ∈ {S}_{val} \left({B}_{0}\right)$ where the inequality becomes an equality if s is maximal. The function 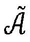 is called an accuracy upper bound function. An example for an accuracy upper bound function is the theoretical cover in already mentioned European Patent Application filed on June 27, 2022, by DASSAULT SYSTEMES and titled "CAD FEATURE TREE GENERATION".

The implementations then define a heuristic score (i.e., an optimization score) $h : {S}_{val} \left({B}_{0}\right) \to ℝ$ as $h \left(s\right) = α {{A}^{˜}}_{M} \left(s\right) - {C}_{M} \left(s\right) .$

The implementations may use an exploration strategy in order to find promising sequences. In particular, the implementations may exploit a beam search strategy as the following:
▪ Start with *E*₀ = {*s*_{∅}}, where *s*_{∅} is the empty feature sequence.
▪ At each step *i* while *Eᵢ* = ∅:
   ∘ For each sequence *s* ∈ *Eᵢ*:
      ▪ Build the possible completions of length one from s: $\left\{s′=\left(s, f\right)∈{S}_{val} \left({B}_{0}\right) |f∈{B}_{s}\right\}$ and add them in *F*_{*i*+1} if they satisfy ${{A}^{˜}}_{M} \left(s′\right) \geq ρ$. This step builds the subset of sequence as discussed before.
   ∘ Select the *k* best sequences in *F*_{*i*+1} according to *h* (those who have the highest heuristic score). Those *k* sequences constitute the set *E*_{*i*+1}. This step builds the one or more next intermediate sequences by selecting them in the subset as discussed above.

Using the exploration strategy, the implementations end up with a set ${S}_{ad}^{∗} ⊂$ ${S}_{ad} \left({B}_{0}\right)$. The implementations may then select the *m* best sequences in ${S}_{ad}^{*}$ according to the objective function 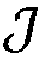 and shows them as the result. The user can then choose a preferred one of the *m* sequences. The chosen sequence constitutes an optimal CAD design of the 3D model, the mesh of which was given as input.

## Claims

1. A computer-implemented method for generating a CAD feature tree from a discrete geometrical representation of a mechanical product, the method comprising:
- providing:
∘ the discrete geometrical representation, and
∘ a set of CAD features; and
- determining one or more sequences of CAD features from the set of CAD features by optimizing an objective function which:
∘ rewards a fitting of the discrete geometrical representation by a candidate sequence, and
∘ penalizes a complexity of a candidate sequence, the complexity of a candidate sequence being a function of the candidate sequence that increases when adding a feature to the candidate sequence.

2. The method of claim 1, wherein the objective function comprises a subtraction of the complexity $\left({C}_{M}\left(s\right)\right)$ of a candidate sequence (s) by a term $\left({αA}_{M}\left(T\left(s\right)\right)\right)$ rewarding a fitting of the discrete geometrical representation by the candidate sequence (s).

3. The method of claim 2, wherein the term rewarding a fitting is weighted by a weighting parameter (*α*).

4. The method of any of claims 2 to 3, wherein the objective function is of the type: $J \left(s\right) = {C}_{M} \left(s\right) - {αA}_{M} \left(T\left(s\right)\right)$ where *s* is the candidate sequence, $I \left(s\right)$ is the objective function, ${C}_{M}$ is the complexity of the candidate sequence and ${αA}_{M} \left(T\left(s\right)\right)$ is the term, *α* being a weighting parameter, and *T(s)* is a CAD feature tree resulting from the candidate sequence *s.*

5. The method of any of claims 1 to 4, wherein the optimization of the objective function is under a constraint that each of the determined one or more sequences having a fitting of the discrete geometrical representation that is larger than a fitting threshold (*ρ*).

6. The method of any of claims 1 to 5, wherein the rewarding of a fitting is based on a ratio between a surface area of a covering (∂*fᵢ* ∩ *M* ) of the discrete geometrical representation ( 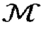 ) by the candidate sequence (*f*), and a surface area (| 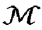 |) of the discrete geometrical representation ( 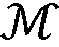 ).

7. The method of any of claims 1 to 6, wherein the complexity is of the type ${C}_{M} \left({f}_{1}, ⋯, {f}_{n}\right) = \frac{1}{M} \left(\left({\sum }_{i = 1}^{n} \left|\partial {f}_{i}∩M\right|\right)-\left|\partial T{\left({f}_{1}, ⋯, {f}_{n}\right)}_{+}∩M\right|\right)$ where ${C}_{M}$ is the complexity of a sequence s of CAD features (*f*₁, ···, *fₙ*), ∂*T*(*f*₁, ··· , *fₙ*) is a boundary of a feature resulting from the sequence *s*, *n* is the number of CAD features in the sequence s, ∂*fᵢ* is a boundary of the CAD feature *fᵢ*, ∂*fᵢ* ∩ Mis an intersection between the boundary ∂*fᵢ* and the discrete geometrical representation *M,* and the function |*N*| outputs a the surface area of the argument *N.*

8. The method of any of claims 1 to 7, wherein the optimization is performed on a subset of candidate sequences each consisting of:
- non-repeated CAD features of the set, and/or
- CAD features of the set ordered with respect to a feature order, the feature order rewards a covering of the discrete geometrical representation by the candidate sequence.

9. The method of any one of claims 1 to 8, wherein the determining of the one or more sequences of CAD features comprises iteratively building the one or more sequences, by iterations of:
- building a subset (*F*_{*i*+1}) of sequence of CAD features, each sequence of the subset being a respective completion (*s*') of a respective intermediate sequence (s) built at the previous iteration; and
- building a one or more next intermediate sequences by selecting them in the subset (*F*_{*i*+1}) based on an optimization score (*h*) of the respective intermediate sequence (*s*').

10. The method of claim 9, wherein the optimization score (*h*) of an intermediate sequence (*s*') is a subtraction of a fitting upper bound $\left({{A}^{˜}}_{M}\left(s′\right)\right)$ of the intermediate sequence (*s*') by the complexity $\left({C}_{M}\left(s′\right)\right)$ of the intermediate sequence (*s*').

11. The method of any of claims 9 to 10, wherein each sequence of the built subset (*F*_{*i*+1}) has a fitting upper bound $\left({{A}^{˜}}_{M}\left(s′\right)\right)$ larger than a fitting upper bound threshold (*ρ*).

12. The method of any of claims 9 to 11, wherein the built respective completions belong to a subset $\left({S}_{val}\right)$ of candidate completions each consisting of:
- non-repeated CAD features of the set, and/or
- CAD features of the set ordered with respect to a feature order, the feature order rewards a covering of the discrete geometrical representation by the candidate sequence.

13. A computer program comprising instructions for performing the method according to any one of claims 1 to 12.

14. A computer readable storage medium having recorded thereon the computer program of claim 13.

15. A system comprising a processor coupled to a memory, the memory having recorded thereon the computer program of claim 13.
